(19) Europäisches Patentamt / European Patent Office / Office européen des brevets

(11) **EP 2 938 179 B1**

(12) **EUROPEAN PATENT SPECIFICATION**

(45) Date of publication and mention
of the grant of the patent:
**26.07.2017  Bulletin 2017/30**

(21) Application number: **13821791.4**

(22) Date of filing: **19.12.2013**

(51) Int Cl.:
**A01B 29/04** *(2006.01)*

(86) International application number:
**PCT/CZ2013/000172**

(87) International publication number:
**WO 2014/101909 (03.07.2014 Gazette 2014/27)**

(54) **RING WHEEL AND ROLLER FOR SOIL CULTIVATION**

RINGRAD UND WALZE ZUR BODENBEARBEITUNG

ÉLÉMENT DE ROULEAU ET ROULEAU POUR TRAVAIL DU SOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2012  CZ 20120960**

(43) Date of publication of application:
**04.11.2015  Bulletin 2015/45**

(73) Proprietor: **Farmet A.S.**
**55203 Ceská Skalice (CZ)**

(72) Inventor: **SCHWARZ, Filip**
**CZ-547 01 Náchod (CZ)**

(74) Representative: **Skoda, Milan**
**Nahoranska 308**
**549 01 Nove Mesto nad Metuji (CZ)**

(56) References cited:
**DE-U1- 29 608 451     FR-A1- 2 547 696
FR-A1- 2 672 463     US-A- 3 173 493**

## Description

## Technical Field

The invention concerns a ring wheel of an agricultural machine for soil cultivation and a roller on which the ring wheel is placed.

## State of the Art

There are many soil cultivation devices known at the present time. For soil crumbling, drag harrows, spike harrows, disk harrows, clod-crushing rollers, bar crumbling rollers, teethed disks and suchlike are used. The use of e.g. bar crumbling rollers is relatively common but it has its limits. If moisture in the soil reaches a certain degree, especially with heavy soils, the internal space of the roller becomes filled with the soil and its performance decreases. Such a clogged roller is then very difficult to clean because the bar roller has become a full roller that has lost its crumbling ability whose towing resistance has increased and whose demand for towing energy has considerably increased.

Patent Document CS 243294 describes a soil-crumbling device with a bar roller in which another, freely-rotating roller is placed. The internal roller pushes the clods and the soil that have got into the inside space of the bar roller out of the roller thus preventing its clogging up during operation.

Another Patent Document EP 1614334 describes a cultivation roller with working and smooth-surface segments arranged alternately. The smooth-surface segments are formed by circular bulges on the surface of the straight load-bearing roller. The working segments are, in relation to the smooth-surface segments, arranged with radial and axial clearance, are freely rotatable and have a different outside diameter in relation to the outside diameter of the smooth-surface segments where the working segments form an oval.

The patent application FR 2672463 A1 shows the clod breaker roller consists of a multitude of toothed wheels slipped, without play, over a shaft which is guided in a chassis. The toothed wheels are angularly offset from one another by an amount which corresponds to half the pitch of the toothing. The hubs of the wheels include indexing means of the dog clutch type for locking two adjacent wheels in position.

The further patent application US 3173493 A shows the earth working roller unit including, with a transverse shaft and a supporting structure in the shaft in turnable, a plurality of side-by-side rollers on the shaft, means mounting alternate ones of the rollers for rotation with the shaft at shaft speed, and means mounting intermediate rollers for rotation with shaft but at a slower speed.

Another Patent Document CZ 290488 describes a cultivation and compacting roller which consists of a larger number of ring wheels rotatable around their axis the outer tires of which (including the projections arranged along both the sides) have a trapezoidal section forming a blunt edge.

These rollers are usually used as trailed rollers along with other agricultural cultivation tools, e.g. rotavators. Depending on the pre-determined width of the agricultural tool, a higher number of ring wheels, as described above, is arranged on one axle and these ring wheels automatically and jointly rotate by means of the projections arranged along both sides of the ring wheels thus compacting the soil that has been crumbled before. Well known are for example the so called Crosskill rollers whose individual ring wheels, sometimes called disks, feature sideway projecting teeth and are made of cast metal. These ring wheels are quite heavy and their outside ring wheels, including their projections, have relatively steep sides forming an angle of 30 degrees. Therefore, they are even able to crush bigger clods and to provide suitable surface for further cultivation.

Ring wheels are usually loosely placed on a round axle. They are not interconnected with any locking elements so as to revolve independently of each other. One major disadvantage of this design is the fact that the freely rotating ring wheels show considerable degree of their mutual wear and tear leading to their destruction. Another disadvantage is the fact that during mutual slewing of two neghbouring ring wheels, the teeth-and-gap symmetry between the neighbouring ring wheels is not maintained.

There are also other variants of soil cultivation Crosskill rollers, e.g. the one with the ring wheels placed on an axle and having three locking elements. As it is advantageous that the teeth arranged on individual ring wheels be directed against the gaps of the neighbouring ring wheels, both the outside ring wheels must have a specific shape, each of them must be different. This is, however, a rather uneconomical design because each of the outside ring wheels of the roller has to be manufactured as a special one. Another disadvantage of the three ring wheels provided with the locking elements is the fact that the lateral orientation of the ring wheels has to be maintained when assembling the roller. If the lateral orientation is not kept, the teeth on neighbouring ring wheels are orientated against each other which is disadvantageous as the rollers assembled in this way become clogged much easier.

It follows from the above state of the art, that there exist many disadvantages related to the present state of the art the most serious one being the fact that it is necessary to manufacture the ring wheels of different shapes in order to assembly a roller that would work in the best possible way. This is rather uneconomical and logistically demanding. Moreover, assembling the rollers from the widely-known ring-wheel designs is also rather complicated.

The intention of this invention is to design such a ring wheel and such a roller for soil cultivation, assembled from the ring wheels, which makes their manufacture and assembly easier and which will be considerably more economical that the designs known.

## Principle of the Invention

The aforementioned disadvantages are, to a large extent, eliminated and the goals of the invention attained by such by a ring wheel, especially by a soil cultivation roller ring wheel according to the variants presented in claims 1-4. According to these claims, the teeth are arranged regularly along both sides of the ring wheel. The ring wheel is provided with a hub in its centre on at least one side of which connecting locking elements are arranged according to the invention the nature of which lies in the fact that the number of the teeth and the number of the locking elements meets the following condition:

$$a*n_1 = b/2 + b*n_2 < 360$$

where:

a = 360/the number of the teeth
b = 360/the number of the locking elements
$n_1$, $n_2$ are whole positive numbers

The main feature of the invention lies in the fact that the axis of the locking element forms an angle of $\beta = \pm a/4$ with the axis of the nearest tooth on the circumference of the given side of the ring wheel.

The advantage of the four variants covered by claims 1-4 are lower production costs owing to possible unification of the semiproducts or tools necessary for their manufacture.

The advantage is that both the sides of the ring wheel are of the same shape and the connecting locking elements and the teeth are of the same size. According to an embodiment of the invention it is proposed a roller for soil cultivation placed on an agricultural machine consisting of the afore-described ring wheels placed on an axle according to the invention the nature of which lies in the fact that the connecting locking elements on neighbouring ring wheels mesh one into the other providing always that the teeth on one ring wheel are arranged against the gaps between the teeth on the neighbouring ring wheel. According to another embodiment of the invention it is proposed a roller for soil cultivation placed on an agricultural machine consisting of the afore-described ring wheels placed on an axle according to the intention the nature of which lies in the fact that the connecting locking elements on neighbouring ring wheels mesh one into the other providing always that the teeth on one ring wheel are arranged against the teeth on the neighbouring ring wheel.

The great advantage of both these arrangements of the soil cultivation roller is the fact that both the outside ring wheels are identical as for their shape.

The advantage of the ring wheel according to this invention is the fact that the determined orientation of the ring wheels need not be maintained when assembling the soil cultivation roller according to this invention. This is advantageous not only when assembling new rollers but also when servicing the rollers in operation owing to simpler logistics and lower storage costs. The above-described invention also makes it possible for the manufacturer to manufacture just one type of the outside ring wheel which, in view of the fact that the lateral orientation need not be maintained, can be used both for the left side as well as for the right side of the roller. The advantage of the aforementioned design is also the fact that mutual turning between the neighbouring ring wheels, or their destruction, does not take place.

## Overview of the Figures

The invention will be better illuminated using a drawing on which Fig. 1 shows a view of the ring wheel having its connecting locking elements arranged symmetrically and the teeth arranged alternately. Fig. 2 depicts the roller for soil cultivation on which the ring wheels are placed. Fig. 3, Fig. 4 and Fig. 5 show the ring wheel where the connecting locking elements are mutually angularly turned, and where the teeth are arranged symmetrically. Fig. 6 represents a view of the soil cultivation roller on which the ring wheels are placed. Fig. 7 and Fig. 8 depict views of the ring wheel where the connecting locking elements are mutually angularly turned, and where the teeth are arranged alternately. Fig. 9 shows the ring wheel where the connecting locking elements are arranged symmetrically and where the teeth are arranged symmetrically as well. Fig. 10 is a view of the agricultural machine on which the teethed ring wheels in question are used. Fig. 11 depicts the mutual angular displacement between the axes of the teeth and the axes of the locking elements.

## Examples of the Performance of the Invention

Example 1

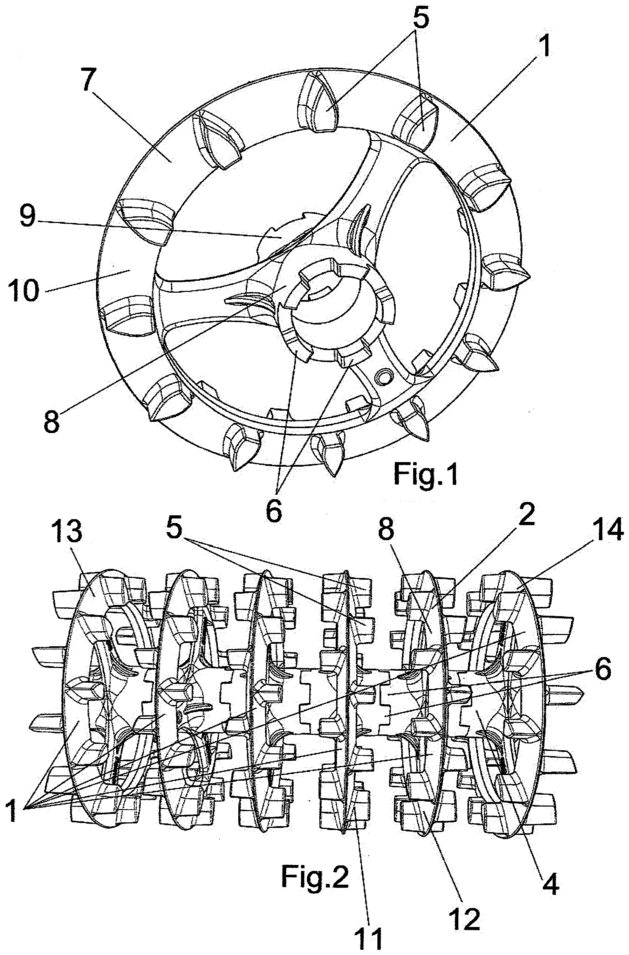

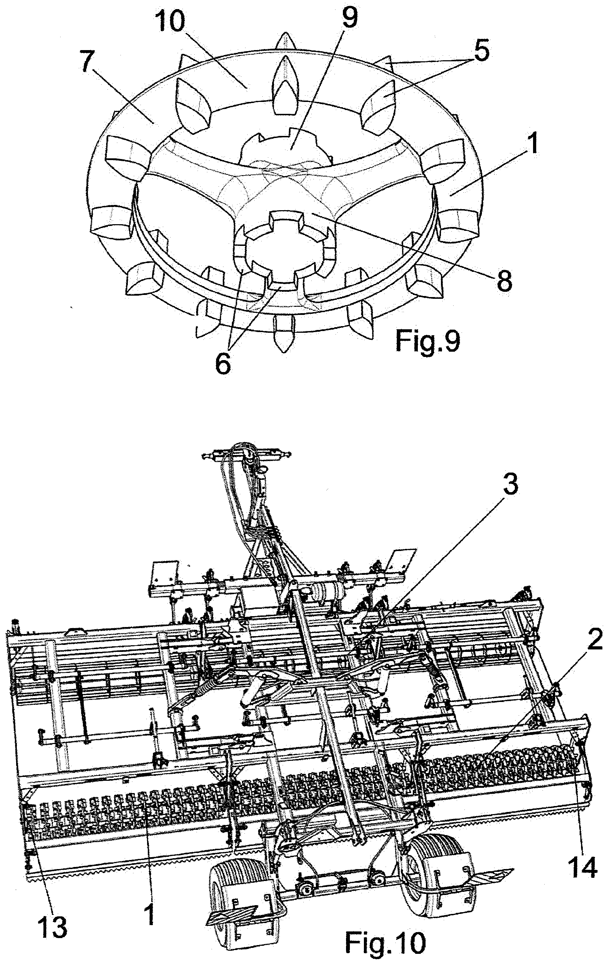

The ring wheel 1 (Fig. 1) of the roller 2 (Fig. 2) for soil cultivation placed on an agricultural machine 3 (Fig. 10) is provided with teeth 5 on its circumference 7 to act on the soil to be cultivated. The teeth are arranged regularly along both sides of the ring wheel 1. The ring wheel 1 is provided with a hub 8 in its centre on both sides of which connecting locking elements 6 are arranged.

The number of the teeth 5 and the number of the connecting locking elements 6 meet the following condition:

$$a*n_1 = b/2 + b*n_2 < 360$$

where:

    a = 360/the number of the teeth
    b = 360/the number of the locking elements
    $n_1$, $n_2$ are whole positive numbers

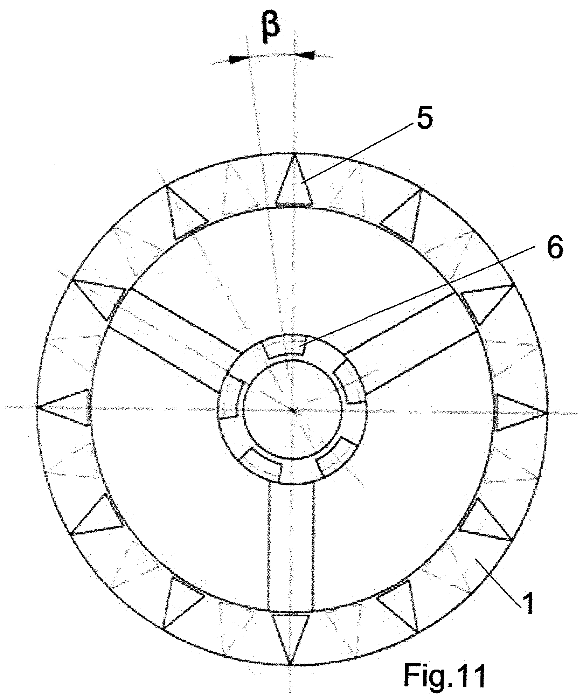

**[0021]** The connecting locking elements 6 are arranged symmetrically on both sides of the hub, the teeth 5 are arranged regularly alternately along both sides of the ring wheel 1 and the axis of the locking element 6 forms an angle of $\beta = \pm a/4$ with the axis of the nearest tooth 5 on the circumference of the given side of the ring wheel 1 (Fig. 11).

The number of the teeth 5 is e.g. 12 and the number of the locking elements 6 is e.g. 5.

The connecting locking elements 6 are of the same size. The teeth 5 are of the same size. The roller 2 for soil cultivation placed on an agricultural machine 3 consists of ring wheels 1 placed on an axle 4. The connecting locking elements 6 of the neighbouring ring wheels 1, 11, 12 mesh one into the other and the teeth 5 of one ring wheel 1, 11 are arranged against the gaps 8 between the teeth 5 on the neighbouring ring wheel 1, 12. Both the outside ring wheels 1, 13, 14 are of the same shape and the connecting locking elements 6 are arranged only on the side facing the neighbouring ring wheel 1, 12.

Example 2

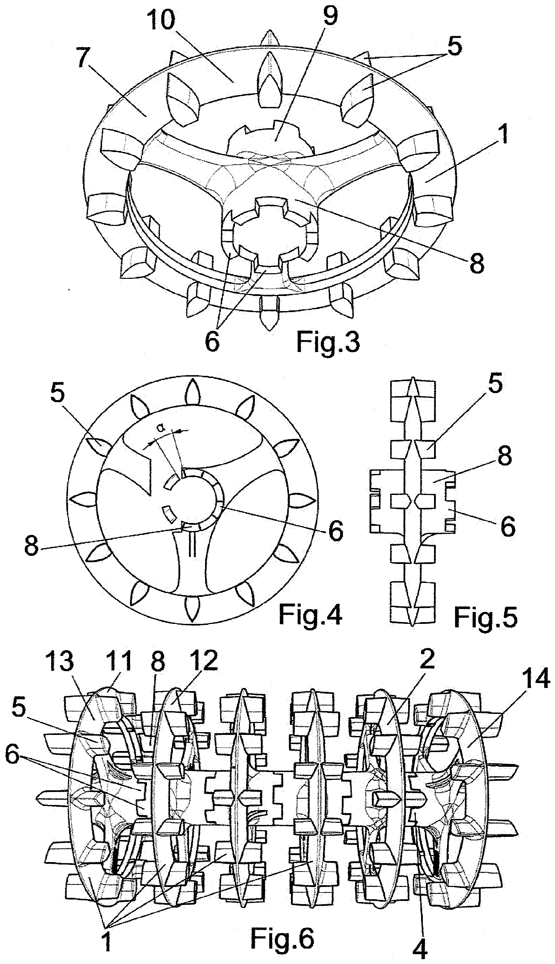

The ring wheel 1 (Fig. 3, Fig. 4, Fig 5) of the roller 2 (Fig. 6) for soil cultivation placed on an agricultural machine 3 (Fig. 10) is provided with teeth 5 on its circumference 7 to act on the soil to be cultivated. The teeth are arranged regularly along both sides of the ring wheel 1. The ring wheel 1 is provided with a hub 8 in its centre on both sides of which connecting locking elements 6 are arranged.

The number of the teeth 5 and the number of the connecting locking elements 6 meet the following condition:

$$a^*n_1 = b/2 + b^*n_2 < 360$$

where:

    a = 360/the number of the teeth
    b = 360/the number of the locking elements
    $n_1$, $n_2$ are whole positive numbers

**[0026]** The connecting locking elements 6 are arranged on both sides of the hub 8, being angularly turned against each other through an angle of $\alpha = a/2$, the teeth 5 are arranged regularly, one against the other, along both sides of the ring wheel 1 and the axis of the locking element 6 forms an angle of $\beta = \pm a/4$ with the axis of the nearest tooth 5 on the circumference of the given side of the ring wheel. 1 (Fig. 11). The number of the teeth 5 is e.g. 12 and the number of the locking elements 6 is e.g. 5.

The connecting locking elements 6 are of the same size. The teeth 5 are of the same size.

The roller 2 (Fig. 6) for soil cultivation placed on an agricultural machine 3 consists of rings wheels 1 placed on an axle 4. The connecting locking elements 6 of the neighbouring ring wheels 1, 11, 12 mesh one into the other and the teeth 5 of one ring wheel 1, 11 are arranged against the gaps 8 between the teeth 5 on the neighbouring ring wheel 1, 12.

Both the outside ring wheels 1, 13, 14 are of the same shape and the connecting locking elements 6 are arranged only on the side facing the neighbouring ring wheel 1, 12.

Example 3

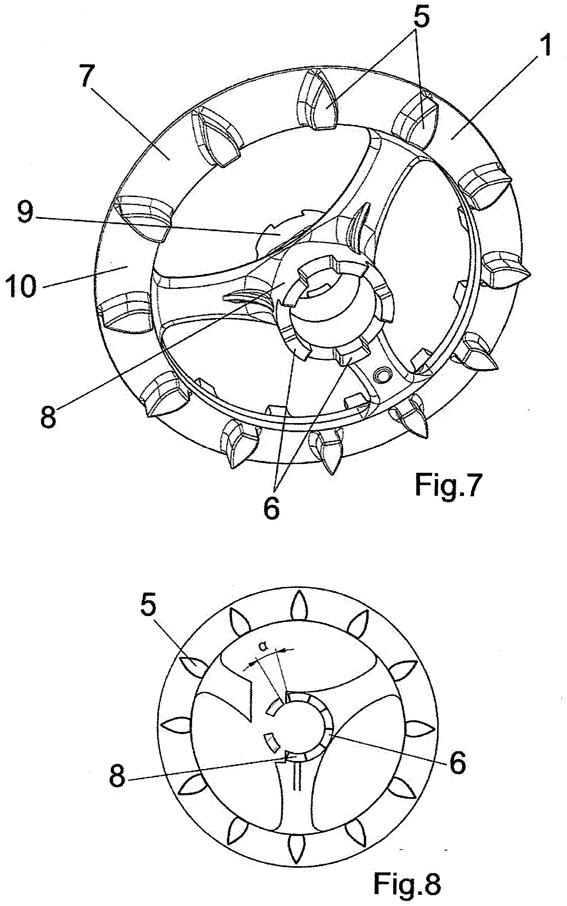

The ring wheel 1 (Fig. 7, Fig. 8,) of the roller 2 for soil cultivation placed on an agricultural machine 3 (Fig. 10) is provided with teeth 5 on its circumference 7 to act on the soil to be cultivated. The teeth are arranged regularly along both sides of the ring wheel 1. The ring wheel 1 is provided with a hub 8 in its centre on both sides of which connecting locking elements 6 are arranged.

The number of the teeth 5 and the number of the connecting locking elements 6 meet the following condition:

$$a^*n_1 = b/2 + b^*n_2 < 360$$

where:

    a = 360/the number of the teeth
    b = 360/the number of the locking elements
    $n_1$, $n_2$ are whole positive numbers

**[0032]** The connecting locking elements 6 are arranged on both sides of the hub 8, being angularly turned against each other through an angle of $\alpha = a/2$, the teeth 5 are arranged regularly alternately along both sides of the ring wheel 1 and the axis of the locking element 6 forms an angle of $\beta = \pm a/4$ with the axis of the nearest tooth 5 on the circumference of the given side of the ring wheel. 1 (Fig. 11). The number of the teeth 5 is e.g. 12 and the number of the locking elements 6 is e.g. 5.

The connecting locking elements 6 are of the same size. The teeth 5 are of the same size.

The roller 2 for soil cultivation (not shown) placed on an agricultural machine 3 consists of ring wheels 1 placed on an axle 4. The connecting locking elements 6 of the neighbouring ring wheels 1, 11, 12 mesh one into the other and the teeth 5 of one ring wheel 1, 11 are arranged against the teeth 5 on the neighbouring ring wheel 1, 12.

Both the outside ring wheels 1, 13, 14 are of the same shape and the connecting locking elements 6 are arranged only on the side facing the neighbouring ring wheel 1, 12.

Example 4

The ring wheel 1 (Fig. 9) of the roller 2 for soil cultivation placed on an agricultural machine 3 (Fig. 10) is provided with teeth 5 on its circumference 7 to act on the soil to be cultivated. The teeth are arranged regularly along both sides of the ring wheel 1. The ring wheel 1 is provided with a hub 8 in its centre on both sides of which connecting locking elements 6 are arranged.

The number of the teeth 5 and the number of the connecting locking elements 6 meet the following condition:

$$a*n_1 = b/2 + b*n_2 < 360$$

where:

    a = 360/the number of the teeth
    b = 360/the number of the locking elements
    $n_1$, $n_2$ are whole positive numbers

[0038] The connecting locking elements 6 are arranged symmetrically on both sides of the hub, the teeth 5 are arranged regularly along both sides of the ring wheel 1 one against the other and the axis of the locking element 6 forms an angle of $\beta = \pm a/4$ with the axis of the nearest tooth 5 on the circumference of the given side of the ring wheel. 1 (Fig. 11). The number of the teeth 5 is e.g. 12 and the number of the locking elements 6 is e.g. 5.

The connecting locking elements 6 are of the same size. The teeth 5 are of the same size.

The roller 2 for soil cultivation (not shown) placed on an agricultural machine 3 consists of metal ring wheels 1 placed on an axle 4. The connecting locking elements 6 of the neighbouring ring wheels 1, 11, 12 mesh one into the other and the teeth 5 of one ring wheel 1, 11 are arranged against the teeth 5 on the neighbouring ring wheel 1, 12.

Both the outside ring wheels 1, 13, 14 are of the same shape and the connecting locking elements 6 are arranged only on the side facing the neighbouring ring wheel 1, 12.

**Industrial Application**

The ring wheel and the roller for soil cultivation according to this invention can be used on soil cultivation agricultural machines.

**List of Reference Marks**

| 1 | Ring Wheel I |
|---|---|
| 2 | Roller |
| 3 | Agricultural Machine |
| 4 | Axle |
| 5 | Tooth |
| 6 | Connecting Locking Element |
| 7 | Circumference |
| 8 | Hub |
| 9 | Side I |
| 10 | Side II |
| 11 | Ring Wheel II |
| 12 | Ring Wheel III |
| 13 | Ring Wheel IV |
| 14 | Ring Wheel V |

**Claims**

1.  A ring wheel for an agricultural roller (2) for soil cultivation, the ring wheel (1) comprising teeth (5) along its circumference (7) to act on the soil to be cultivated, where the teeth are arranged regularly along both sides of the ring wheel (1), where the ring wheel is provided with a hub (8) in its centre on at least one side of which connecting locking elements (6) are arranged, and the teeth (5) are arranged regularly alternately along both sides of the ring wheel (1), **CHARACTERISED in that** the number of the teeth (5) and the number of the connecting locking elements (6) meet the following condition:

$$a*n_1 = b/2 + b*n_2 < 360$$

    where:

        a = 360/the number of the teeth,
        b = 360/the number of the locking elements,
        $n_1$, $n_2$ are whole positive numbers,

    and the connecting locking elements (6) are arranged symmetrically on both sides of the hub (8) and the axis of at least one locking element (6) forms an angle of $\beta = \pm a/4$ with the axis of the nearest tooth (5) on the circumference of the given side of the ring wheel (1).

2.  A ring wheel for an agricultural roller (2) for soil cultivation, the ring wheel (1) comprising teeth (5) along its circumference (7) to act on the soil to be cultivated, where the teeth are arranged regularly along both sides of the ring wheel (1), where the ring wheel is provided with a hub (8) in its centre on at least one side of which connecting locking elements (6) are arranged, and the teeth (5) are arranged regularly, one against the other, along both sides of the ring wheel (1), **CHARACTERISED in that** the number of the teeth (5) and the number of the connecting locking elements (6) meet the following condition:

$$a*n_1 = b/2 + b*n_2 < 360$$

where:

    a = 360/the number of the teeth,
    b = 360/the number of the locking elements,
    $n_1$, $n_2$ are whole positive numbers,

and the connecting locking elements (6) are arranged on both sides of the hub (8) being angularly turned against each other through an angle of $\alpha = a/2$ and the axis of at least one locking element (6) forms an angle of $\beta = \pm a/4$ with the axis of the nearest tooth (5) on the circumference of the given side of the ring wheel (1).

3. A ring wheel for an agricultural roller (2) for soil cultivation, the ring wheel (1) comprising teeth (5) along its circumference (7) to act on the soil to be cultivated, where the teeth are arranged regularly along both sides of the ring wheel (1), where the ring wheel is provided with a hub (8) in its centre on at least one side of which connecting locking elements (6) are arranged, and the teeth (5) are arranged regularly alternately along both sides of the ring wheel (1), **CHARACTERISED in that** the number of the teeth (5) and the number of the connecting locking elements (6) meet the following condition:

$$a*n_1 = b/2 + b*n_2 < 360$$

where:

    a = 360/the number of the teeth,
    b = 360/the number of the locking elements,
    $n_1$, $n_2$ are whole positive numbers,

and the connecting locking elements (6) are arranged on both sides of the hub (8) being angularly turned against each other through an angle of $\alpha = a/2$ and the axis of at least one locking element (6) forms an angle of $\beta = \pm a/4$ with the axis of the nearest tooth (5) on the circumference of the given side of the ring wheel (1).

4. A ring wheel for an agricultural roller (2) for soil cultivation, the ring wheel (1) comprising teeth (5) along its circumference (7) to act on the soil to be cultivated, where the teeth are arranged regularly along both sides of the ring wheel (1), where the ring wheel is provided with a hub (8) in its centre on at least one side of which connecting locking elements (6) are arranged, and the teeth (5) are arranged regularly, one against the other, along both sides of the ring wheel (1), **CHARACTERISED in that** the number of the teeth (5) and the number of the connecting locking elements (6) meet the following condition:

$$a*n_1 = b/2 + b*n_2 < 360$$

where:

    a = 360/the number of the teeth,
    b = 360/the number of the locking elements,
    $n_1$, $n_2$ are whole positive numbers,

and the connecting locking elements (6) are arranged symmetrically on both sides of the hub (8)-and the axis of at least one locking element (6) forms an angle of $\beta = \pm a/4$ with the axis of the nearest tooth (5) on the circumference of the given side of the ring wheel (1).

5. The ring wheel according to one of the previous claims, further **characterised in that** the connecting locking elements (6) are of the same size.

6. The ring wheel according to one of the previous claims, further **characterised in that** the teeth (5) are of the same size.

7. A roller for soil cultivation for an agricultural machine (3), the roller comprising ring wheels (1) according to any of the previous claims, said ring wheels (1) being placed on an axle (4), further **characterised in that** the connecting locking elements (6) of the neighbouring ring wheels (1, 11, 12) mesh one into the other and the teeth (5) on one ring wheel (1, 11) are arranged against the gaps (8) between the teeth (5) of the neighbouring ring wheel (1, 12).

8. A roller for soil cultivation for an agricultural machine (3) the roller comprising ring wheels (1) according to any of the claims 1 through 6, said ring wheels (1) being placed on an axle (4), further **characterised in that** the connecting locking elements (6) of the neighbouring ring wheels (1, 11, 12) mesh one into the other and the teeth (5) on one ring wheel (1, 11) are arranged against the teeth (5) on the neighbouring ring wheel (1, 12).

9. The roller for soil cultivation according to one of claims 7 and 8 above further **characterised in that** the outside ring wheels (1, 13, 14) are of the same shape.

**Patentansprüche**

1. Der Radreifen (1) der Walze (2) für die Bodenrekultivierung der Landmaschine (3), der an seinem Umfang (7) mit Zähnen (5) für die Wirkung auf den Boden versehen ist, die auf beiden Seiten des Radreifens (1) regelmäßig angeordnet sind und dieser in dessen Mitte mit einer Nabe (8) versehen ist, auf deren mindestens einer Seite Verbundverschlüsse (6) angeordnet sind, und die Zähne (5) dann abwechselnd auf beiden Seiten des Radreifens (1) regelmäßig angeordnet sind, **dadurch gekennzeichnet, dass** der Anzahl von Zähnen (5) und Verbundverschlüssen (6) folgende Bedingung:

$$a^*n_1 = b/2 + b^*n_2 < 360$$

erfüllt wird, wo:

    a = 360/Anzahl der Zähne,
    b = 360/Anzahl der Verschlüsse,
    $n_1$, $n_2$ ganze positive Zahlen sind,

und die Verbundverschlüsse (6) auf beiden Seiten der Nabe (8) symmetrisch angeordnet sind und die Achse des Verschlusses (6) mit der Achse des nächsten Zahnes (5) am Umfang der gegebenen Seite des Radreifens (1) einen Winkel ß = +- a/4 bildet.

2. Der Radreifen (1) der Walze (2) für die Bodenrekultivierung der Landmaschine (3), der an seinem Umfang (7) mit Zähnen (5) für die Wirkung auf den zu behandelnden Boden versehen sind, sind auf beiden Seiten des Radreifens (1) regelmäßig angeordnet, und dieser in dessen Mitte mit einer Narbe (8) versehen ist, auf deren mindestens einer Seite Verbundverschlüsse (6) angeordnet sind, und die Zähne (5) auf beiden Seiten des Radreifens (1) regelmäßig abwechselnd angeordnet sind, **dadurch gekennzeichnet, dass** der Anzahl von Zähnen (5) und Verbundverschlüssen (6) folgende Bedingung:

$$a^*n_1 = b/2 + b^*n_2 < 360$$

erfüllt wird, wo:

    a = 360/Anzahl von Zähnen,
    b = 360/Anzahl von Verschlüssen,
    $n_1$, $n_2$ ganze positive Zahlen sind,

und die Verbundverschlüsse (6) auf beiden Seiten der Narbe (8) angeordnet sind mit gegenseitigem Teilumdrehungswinkel $\alpha$ = a/2, und die Achse des Verschlusses (6) mit der Achse des nächsten Zahnes (5) am Umfang der gegebenen Seite des Radreifens (1) einen Winkel ß= +-a/4 bildet.

3. Der Radreifen (1) der Walze (2) für die Bodenrekultivierung der Landmaschine (3), der an seinem Umfang (7) mit Zähnen (5) für die Wirkung auf den zu behandelnden Boden versehen ist, die auf beiden Seiten des Radreifens (1) regelmäßig angeordnet sind, und dieser in dessen Mitte mit einer Narbe (8) versehen ist, auf deren mindestens einer Seite Verbundverschlüsse (6) angeordnet sind, und die Zähne (5) auf beiden Seiten des Radreifens (1) regemäßig abwechselnd angeordnet sind, **dadurch gekennzeichnet, dass** der Anzahl von Zähnen (5) und Verbundverschlüssen (6) folgende Bedingung:

$$a^*n_1 = b/2 + b^*n_2 < 360$$

erfüllt wird, wo:

    a = 360/Anzahl von Zähnen,
    b = 360/Anzahl von Verschlüssen,
    $n_1$, $n_2$ ganze positive Zahlen sind,

und die Verbundverschlüsse (6) auf beiden Seiten der Narbe (8) angeordnet sind mit gegenseitigem Teilumdrehungswinkel $\alpha$ = a/2 und die Achse des Verschlusses (6) mit der Achse des nächsten Zahnes (5) am Umfang der gegebenen Seite des Radreifens (1) einen Winkel ß =+-a/4 bildet.

4. Der Radreifen (1) der Walze (2) für die Bodenrekultivierung der Landmaschine (3), der an seinem Umfang (7) mit Zähnen (5) für die Wirkung auf den zu behandelnden Boden versehen ist, die auf beiden Seiten des Radreifens (1) regelmäßig angeordnet sind, und dieser in dessen Mitte mit einer Narbe (8) versehen ist, auf deren mindestens einer Seite Verbundverschlüsse (6) angeordnet sind, und die Zähne (5) auf beiden Seiten des Radreifens (1) regelmäßig abwechselnd angeordnet sind, **dadurch gekennzeichnet, dass** der Anzahl von Zähnen (5) und Verbundverschlüssen (6) folgende Bedingung:

$$a^*n_1 = b/2 + b^*n_2 < 360$$

erfüllt wird, wo:

    a = 360/Anzahl von Zähnen,
    b = 360/Anzahl von Verschlüssen,
    $n_1$, $n_2$ ganze positive Zahlen sind,

und die Verbundverschlüsse (6) auf beiden Seiten der Narbe (8) symmetrisch angeordnet sind und die Achse des Verschlusses (6) mit der Achse des nächsten Zahnes (5) am Umfang der gegebenen Seite des Radreifens (1) einen Winkel ß = +- a/4 bildet.

5. Der Radreifen nach einem der vorherigen Ansprüche, **dadurch gekennzeichnet, dass** die Verbundverschlüsse (6) gleiche Größe aufweisen.

6. Der Radreifen nach einem der vorherigen Ansprüche **dadurch gekennzeichnet, dass** die Zähne (5) gleiche Größe aufweisen.

7. Die Walze für die Bodenrekultivierung, insbesondere die Walze (2) für die Bodenrekultivierung, die sich auf der Landmaschine (3) befindet, die auf der Welle (4) eingefasste Radreifen (1) nach einem der vorherigen Ansprüche enthält, **dadurch gekennzeichnet, dass** die Verbundverschlüsse 6) der benachbarten Radreifen (1,11,12) ineinander fallen, wobei die Zähne (5) eines Radreifens (1,11) gegenüber den Lücken (8) zwischen den Zähnen (5) des benachbarten Radreifens (1,12) angeordnet sind.

8. Die Walze für die Bodenrekultivierung, insbesondere die Walze (2) für die Bodenrekultivierung, die sich auf der Landmaschine (3) befindet, die auf der Welle (4) eingefasste Radreifen (1) nach einem der Ansprüche 1 bis 6 enthält, **dadurch gekennzeichnet, dass** die Verbundverschlüsse (6) der benachbarten Radreifen (1,11,12) einander fallen, wobei die Zähne (5) eines Radreifens (1,11) gegen die Zähne (5) des benachbarten Radreifens (1,12) eingestellt sind.

9. Die Walze für die Bodenrekultivierung nach einem der Ansprüche 7 und 8, **dadurch gekennzeichnet, dass** die Randradreifen (1,13,14) gleiche Form aufweisen.

**Revendications**

1. La roue à bandage (1) du cylindre (2) pour le travail de la terre d'une machine agricole (3) qui est à sa circonférence (7), pour provoquer l'effet à la terre traitée, pourvue de dents (5), disposées régulièrement sur les deux côtés de la roue à bandage (1), et qui sont près de leur centre munies d'un moyeu (8) qui a au moins sur un côté des fermetures de jonction (6), et les dents (5) sont disposées régulièrement en alternance sur les deux côtés de la roue à bandage (1), **caractérisé en ce que,** le nombre des dents (5) et le nombre des fermetures de jonction (6) satisfasse la condition :

$$a^*n_1 = b/2 + b^*n_2 < 360$$

où :

    a = 360/nombre des dents,
    b = 360/nombre des fermetures,
    $n_1$, $n_2$ sont les nombres entiers positifs,

et les fermetures de jonction (6) sont disposées de façon symétrique des deux côtés du moyeu (8) et l'axe de la fermeture (6) est à angle, avec l'axe de la dent la plus proche (5) sur la circonférence du côté donné de la roue à bandage (1), ß = +- a/4.

2. La roue à bandage (1) du cylindre (2) pour le travail de la terre d'une machine agricole (3) qui est à sa circonférence (7), pour provoquer l'effet à la terre traitée, pourvue des dents (5), disposées régulièrement sur les deux côtés de la roue à bandage (1), et qui sont près de leur centre munies d'un moyeu (8) qui a au moins sur un côté des fermetures de jonction (6), et les dents (5) sont disposées régulièrement en alternance sur les deux côtés de la roue à bandage (1), **caractérisé en ce que,** le nombre des dents (5) et le nombre des fermetures de jonction (6) satisfasse la condition :

$$a^*n_1 = b/2 + b^*n_2 < 360$$

où :

    a = 360/nombre des dents,
    b = 360/nombre des fermetures,
    $n_1$, $n_2$ sont les nombres entiers positifs,

et les fermetures de jonction (6) sont disposées sur les deux côtés du moyeu (8) de façon qu'ils sont tournées respectivement de l'angle $\alpha$ = a/2, et l'axe de la fermeture (6) est à angle, avec l'axe de la dent la plus proche (5) sur la circonférence du côté donné de la roue à bandage (1), ß = +- a/4.

3. La roue à bandage (1) du cylindre (2) pour le travail de la terre d'une machine agricole (3) qui est à sa circonférence (7), pour provoquer l'effet à la terre traitée, pourvue de dents (5), disposées régulièrement sur les deux côtés de la roue à bandage (1), et qui sont près de leur centre munies d'un moyeu (8) qui a au moins sur un côté des fermetures de jonction (6), et les dents (5) sont disposées régulièrement en alternance sur les deux côtés de la roue à bandage (1), **caractérisé en ce que,** le nombre des dents (5) et le nombre des fermetures de jonction (6) satisfasse la condition :

$$a^*n_1 = b/2 + b^*n_2 < 360$$

où :

a = 360/nombre des dents,
b = 360/nombre des fermetures,
$n_1$, $n_2$ sont les nombres entiers positifs,

et les fermetures de jonction (6) sont disposées de façon qu'ils sont tournées de l'angle $\alpha$ = a/2, et l'axe de la fermeture (6) est à angle, avec l'axe de la dent la plus proche (5) sur la circonférence du côté donné de la roue à bandage (1), ß = +- a/4.

**4.** La roue à bandage (1) du cylindre (2) pour le travail de la terre d'une machine agricole (3) qui est à sa circonférence (7) pour provoquer l'effet à la terre traitée pourvue de dents (5), disposées régulièrement sur les deux côtés de la roue à bandage (1), et qui sont près de leur centre munies d'un moyeu (8) qui a au moins sur un côté des fermetures de jonction (6), et les dents (5) sont disposées régulièrement en alternance sur les deux côtés de la roue à bandage (1), **caractérisé en ce que,** le nombre des dents (5) et le nombre des fermetures de jonction (6) satisfasse la condition :

$$a^*n_1 = b/2 + b^*n_2 < 360$$

où :

a = 360/nombre des dents,
b = 360/nombre des fermetures,
$n_1$, $n_2$ sont les nombres entiers positifs,

et les fermetures de jonction (6) sont disposées de façon symétrique de deux côtés du moyeu (8) et l'axe de la fermeture (6) est à angle, avec l'axe de la dent la plus proche (5) sur la circonférence du côté donné de la roue à bandage (1), ß = +- a/4.

**5.** La roue à bandage selon une des revendications précédentes, **caractérisé en ce que,** les fermeture de jonction (6) sont la même taille.

**6.** La roue à bandage selon une des revendications précédentes, **caractérisé en ce que**, les dent (5) sont la même taille.

**7.** Le cylindre pour le travail de la terre, notamment le cylindre (2) pour le travail de la terre placé à une machine agricole (3), comportant à l'arbre (4) les roues à bandage (1) selon une des revendications précédentes, **caractérisé en ce que,** les fermeture de jonction (6) des roues à bandage voisines (1,11,12) s'engrènent, c'est-à-dire les dents (5) d'une roue à bandage (1,11) sont disposées contre les trous (8) entre les dents (5) de la roue à bandage voisine (1,12).

**8.** Le cylindre pour le travail de la terre, notamment le cylindre (2) pour le travail de la terre placé à une machine agricole (3), comportant à l'arbre (4) les roues à bandage (1) selon une des revendications précédentes, **caractérisé en ce que,** les fermeture de jonction (6) des roues à bandage voisines (1,11,12) s'engrènent, c'est-à-dire les dents (5) d'une roue à bandage (1,11) sont disposées contre les dents (5) de la roue à bandage voisine (1,12).

**9.** Le cylindre pour le travail de la terre selon une des revendications 7 et 8, **caractérisé en ce que,** les roues à bandage en bout (1,13,14) sont d'une forme identique.

Fig.1

Fig.2

10    9    5
7                        1

                              8

6    Fig.3

5                                    5

        α                            8

8                  6    6

        Fig.4              Fig.5

13  11  8  12              2        14
5

6

1    Fig.6              4

**Fig.7**

**Fig.8**

Fig.9

Fig.10

Fig.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CS 243294
- EP 1614334 A
- FR 2672463 A1
- US 3173493 A
- CZ 290488